# EUROPEAN PATENT SPECIFICATION

(11) **EP 1 166 151 B1**
(45) Date of publication and mention of the grant of the patent: **11.01.2006**
(21) Application number: 00904779.6
(22) Date of filing: 24.02.2000
(51) Int. Cl.: G01V 1/00

(54) **METHOD AND APPARATUS FOR INVESTIGATING AN AREA WITH RESPECT TO PRESENCE/ABSENCE OF PREDETERMINED GEOPHYSICAL SUBTERRANEAN PROPERTIES**
METHODE UND MESSGERÄT ZUR UNTERSUCHUNG EINES GEBIETES AUF PRÄSENZ/ABSENZ EINER BESTIMMTEN GEOPHYSIKALISCHEN EIGENSCHAFT
PROCEDE ET DISPOSITIF DE RECHERCHE DE LA PRESENCE/ABSENCE DE PROPRIETES GEOPHYSIQUES SOUTERRAINES DETERMINEES DANS UNE REGION

(30) Priority: 01.04.1999 DE 19915036
(43) Date of publication of application: 02.01.2002
(73) Proprietor: ADNR Technology Services GmbH, 6648 Minusio (CH)
(72) Inventor: DANGEL, Stefan, CH-8706 Meilen (CH); SINGER, Johannes, D-92521 Schwarzenfeld (DE); RODE, Ernst, Dietrich, CH-6648 Minusio (CH)
(74) Representative: Patentanwälte Zellentin & Partner
(86) International application number: PCT/CH2000/000102
(87) International publication number: WO 2000/060377

(56) References cited:
- WO-A-99/09433
- US-A- 5 148 110
- US-A- 5 890 142
- PATENT ABSTRACTS OF JAPAN vol. 1996, no. 06, 28 June 1996 (1996-06-28) & JP 08 044699 A (MEIDENSHA CORP), 16 February 1996 (1996-02-16)
- R.Hegger et.a. "Practical implementation on nonlinear time series methods: The TISEAN package", Chaos, Vol.9, Nr.2, June 1999, p.413-435 XP002139927 cited in the application

## Description

### Background of the invention

### 1. Field of the invention

This invention pertains to investigating an area with respect to presence/absence of at least one predetermined geophysical subterranean property. It is thereby especially directed on investigating such area with respect to presence/absence of subterranean hydrocarbon deposits, especially of exploitable ones. In the latter case advantage is taken from the fact that hydrocarbon deposits as a multiphase fluidic system in porous environment behaves highly non-linear in opposition to other geophysical subterranean properties.

Nevertheless, and in its generality the present invention may be applied for investigating areas with respect to presence/absence of other predetermined geophysical subterranean properties than on that of subterranean hydrocarbon deposits.

### 2. Description of prior art

For investigating an area with respect to presence/absence of at least one predetermined geophysical subterranean property, especially with an eye on finding exploitable subterranean hydrocarbon deposits, it is known to expose the underground to an investigation stimulus, be it of mechanical or be it of electromagnetic nature. The response of the underground system is analysed on the basis of a correlation response/stimulus.

Thereby, we understand as an investigation stimulus, a stimulus which is applied to earth in an area under investigation, specifically for such investigation purposes in opposition to a stimulus which is applied to earth by any third parties activities as by machines operating in neighbourhood etc. or which is applied by nature as e.g. by the wave rhythm of sea.

We further understand by correlation in its most general meaning any analysing method which makes a comparison between a stimulus and system answer. The system is the subterranean underground of the area under investigation.

According to the US-A-4 904 942 the investigation stimulus consists of a seismic impact such as caused by a dynamite explosion and the electromagnetic signal response is analysed by correlation with the stimulus as an indication of the existence of hydrocarbon deposits. According to the US 5 877 995 the investigation stimulus consists of an electric field which is generated by a power source, and, again by correlation, seismic response waves are analysed.

JP-A-08 044 699 describes near future signal extrapolation using non-linear time series analysis.

### Summary of the invention

It is an object of the present invention to provide novel methods for investigating an area with respect to presence/absence of at least one predetermined geophysical subterranean property and, accordingly, novel apparatus, thereby providing for new and additional approaches for such investigation. The method and apparatus according to the present invention may be practised and applied respectively per se or in combination with prior art approaches for increasing reliability of investigation results.

This is reached by a method as defined by claim 1.

With respect to non-linear time series analysis as exploited under one aspect of the present invention we refer to (1) H. Kantz and T. Schreiber "Nonlinear time series analysis", Cambridge University Press, Cambridge U.K., 1999, further to (2) R. Badii and A. Politi "Complexity", Cambridge University - Press, Cambridge U.K., 1997 as well as to (3) T. Bohr et al. "Dynamical Systems Approach to Turbulence", Cambridge University Press, Cambridge U.K., 1998. With respect to the mathematic approach to such non-linear time series analysis we especially and completely refer to that literature (1) to (3) which is to be considered as an integrated part of the present description with respect to such analysis technique as well as to the enclosed (4) Appendix A: R. Hegger et al. "Practical implementation on nonlinear time series methods: The TISEAN package", Chaos, Vol. 9, No. 2, June 1999, pages 413 to 435.

In a preferred mode of the invention the method of performing a non-linear time series analysis as mentioned above is combined with the approach of applying no investigation stimulus.

In a preferred mode of the inventive method whereat analysing is performed on the basis of said non-linear time series analysis, deterministic and stochastic signal components from the monitored signals are neglected or separated and the deterministic-chaotic components are extracted and applied to the subsequent comparing. This may be accomplished e.g. using non-linear filtering such as described in (1).

Thereby, it must be noted that comparing may clearly be done by an engineer or, more generically, by a person who knows how a respective signal must look like if the predetermined property is present at the investigated area.

Further, deterministic signal components are components of low dimension, deterministic-chaotic components are components of higher dimension (see (1) to (4), latter enclosed).

As was mentioned above the inventive method is preferably performed by selecting the predetermined subterranean property to be investigated on its presence or absence to be that of exploitable subterranean hydrocarbon deposits.

In a further preferred mode of the inventive method analysing includes representing the signals analysed by at least one chaos indicator, thereby especially preferred by at least one of the following chaos indicators:
- delay embedding
- correlation dimension versus embedding dimension
- structure function representation
- Hurst-exponent-spectrum.

Further, the inventive method's signal analysis preferably comprises either per se or - under the second aspect - in combination with the non-linear time series analyses, analysing the signals in their frequency spectrum representation.

As was mentioned above the present invention proposes to monitor and analyse signals emanating from subterranean underground without applying an investigation stimulus. With respect to signals intrinsically emanating from the underground we refer e.g. to (5) N. Suda, K. Nawa and Y. Fukao "Earth's background free oscillations", Science 279:(5359), pages 2089 to 2091, 1998 and to (6) J. Vila, "The broadband seismic station CAD: Site characteristics and background noise", Bull. Seismol. Soc. Am. 88/1, pp 297 - 303, 1998.

So as to realise the object as mentioned above the present invention further proposes an apparatus as defined in claim.

Thereby, the analysing unit does not perform any correlation with an investigation stimulus source signal, as e.g. stimulus response evaluation.

Under the second aspect the inventive apparatus may or may not evaluate or co-evaluate by its analysing unit a stimulus signal generated by an investigation stimulus source, and it does perform signal analysis by non-linear time series analysis as was defined above.

Further, in the inventive apparatus the analysing unit generates an output signal in dependency of the deterministic-chaotic signal component of a signal applied to the input thereof.

Under the second aspect the present invention proposes a method for manufacturing a product with at least one component derived from natural hydrocarbon or being natural hydrocarbon as exploited from subterranean underground, said method comprising the steps of
- monitoring mechanical and/or electromagnetic signals emanating from subterranean underground of an investigated area;
- analysing said signals by means of a non-linear time series analysis;
- comparing the result of said analysing with the result of an equal analysis of signals emanating from subterranean underground of at least one area with known presence of exploitable subterranean deposits of hydrocarbon;
- identifying presence or absence of said hydrocarbon deposits at said investigated area by the result of said comparing;
- exploiting said subterranean hydrocarbon deposits of said investigated area, if said components result identifies such presence and producing said product by said hydrocarbon exploited.

Thereby, the possibilities opened by the inventive method and apparatus for investigation are exploited, which allows finding and thus exploitation especially of hydrocarbon deposits in a less costly way than was possible by prior art approaches. This is especially due to the rather higher accuracy, which is gained by the present invention, especially when combined with prior art approaches.

The invention will now be described by examples and with the help of figures. The figures show:
- Fig. 1:: in a functional-block/signal-flow diagram an inventive apparatus of a preferred mode, operating according to the inventive methods and construed so as to perform steps of the inventive method of producing;
- Fig. 2:: acoustical signals as monitored at an area without hydrocarbon deposits in the underground (a) and at an area (b) with hydrocarbon deposits present in the underground;
- Fig. 3:: delay embedding representation of the signals according to (a) of fig. 2, i.e. monitored at an area with no underground hydrocarbon deposits and (b) of the signal (b) of fig 2, i.e. of a signal monitored at an area with underground hydrocarbon deposits present;
- Fig. 4:: correlation dimension as a function of embedding dimension representation, namely (a) of signals (a) of fig. 2, i.e. as monitored at an area without underground hydrocarbon deposits and (b) of signals (b) of fig. 2, i.e. monitored at an area with hydrocarbon underground deposits present;
- Fig. 5:: structure function representation (a) of signals according to (a) of fig. 2, i.e. as monitored at an area without underground hydrocarbon deposits and (b) according to (b) of fig. 2, i.e. of signals as monitored at an area with hydrocarbon underground deposits present;
- Fig. 6:: Hurst-exponent-spectrum representation (a) of signals according to (a) of fig. 2, i.e. as monitored at an area without underground hydrocarbon deposits and (b) of signals (b) of fig. 2, i.e. of signals as monitored at an area with underground hydrocarbon deposits present;
- Fig. 7:: frequency representation (a) of signals (a) of fig. 2, i.e. as monitored at an area with no underground hydrocarbon deposits and (b) of signals (b) of fig. 2, i.e. as monitored at an area with underground hydrocarbon deposit present.

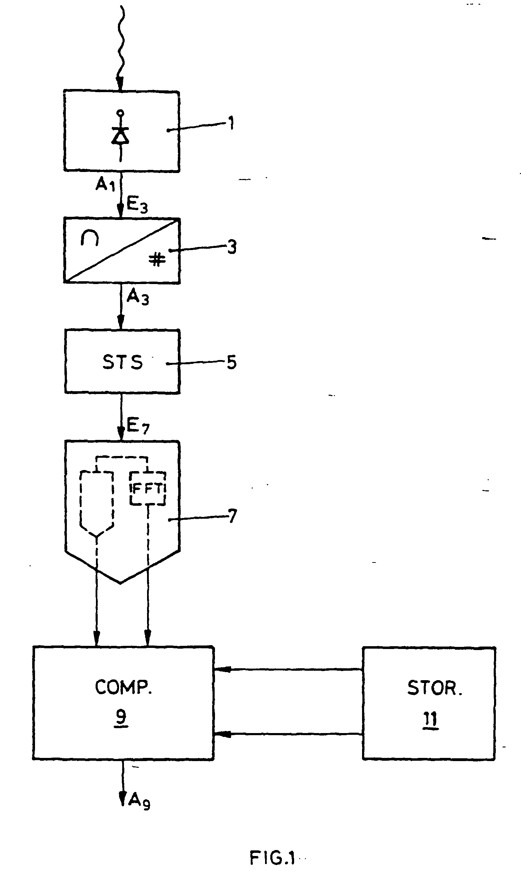

According to fig. 1 acoustical and/or seismic and/or electromagnetic signals as do emanate from subterranean underground are monitored by means of an arrangement 1 of at least one of respective sensors or transducers. Thereby an investigation stimulus may or may not be applied. Under the first aspect of the invention it is not applied.

As was mentioned, in a preferred embodiment a combination of geoseismic, acoustical and electromagnetic sensors is provided and operated in parallel.

Such sensors are preferably spread over the area where a predetermined property as especially presence of hydrocarbon deposits is suspected. The outputs signals of the sensors are monitored synchronously. Additionally it may be advantageous to provide some or all of the sensors of the arrangement within boreholes in predetermined depth within the subterranean underground.

It is further proposed to use sensors which may register signals with three separate components according to the three spatial directions.

In a specific embodiment a sensor of the following type was used:
- acoustical sensor
- sensitivity: 10⁻⁹ m/sec.
- bandwidth: 0,1 - 16 Hz

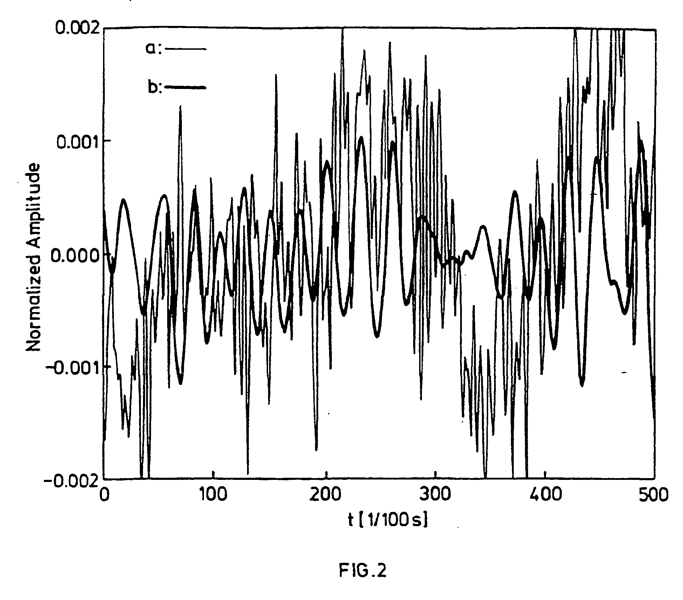

In fig. 2 the monitored acoustical signal at an area without subterranean hydrocarbon deposits (a) is shown, as well as (b) such signal recorded at an area with an exploitable deposit of hydrocarbon present in the underground.

The signal as monitored at the output A₁ of the arrangement 1 of transducers is led to the input E₃ of an analogue to digital converter arrangement 3. The digitalised signals at output A₃ of the analogue to digital converter arrangement 3 are fed to a signal versus time storage 5, wherein signal/time-sequences are stored.

It is to be noted that the feed of signals from transducer arrangement 1 or from analogue/digital converter 3, or even from storage 5, finally to an analysing unit 7 may be done by any technique of signal-transmittance, e.g. by electric or optical connections or "manmade" by transportation of the signals stored as e.g. on tape or CD-ROM and input to the analysing unit. Further, the arrangement 1 may consist of one or more than one distinct transducer. Output signals of more than one transducer of arrangement 1 may be combined and pre-evaluated e.g. by averaging to form one signal finally input to analysing unit 7.

In an embodiment as realised today signal sequences of 10 sec. to 60 sec. are stored in the signal versus time storage unit 5.

The signal versus time sequences as stored in unit 5 are fed to the input E₇ of an analysing unit 7 performing - under the second aspect of the invention - a non-linear time series analysis. Preferably the analysing unit 7 separates from the signal versus time sequences input to E₇ deterministic signal components as well as stochastic signal components - if at all present in the input signals to a non-neglectable, disturbing amount respectively. Especially deterministic-chaotic signal components are further exploited. This exploitation of the deterministic-chaotic signal components is performed preferably in that signals indicative of such deterministic-chaotic components are generated in analysing unit 7. The signals input to E₇ or components thereof - thereby especially the deterministic-chaotic components - are represented by so-called chaos indicators. Such preferred chaos indicator signals as generated in analysing unit 7 are now shown, resulting from signals monitored as of (a) and (b) of Fig. 2.

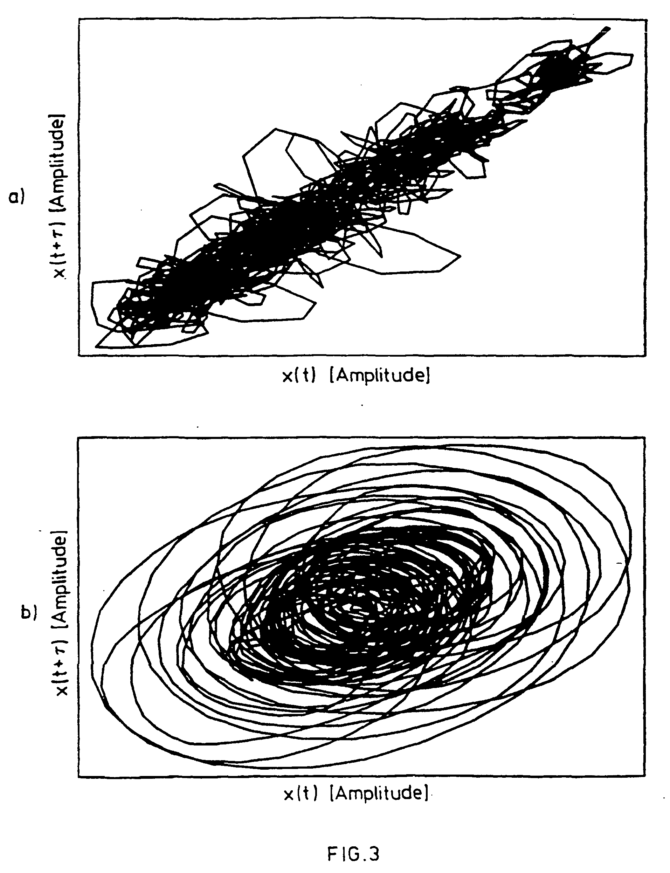

In fig. 3 signal according (a) of fig. 2, i.e. monitored at an area without hydrocarbon deposits, is shown in the so-called delay-embedded representation, as a chaos indicator.

In (b) of fig. 3 the chaos indicator delay embedded representation of the signal according to (b) of fig. 2, i.e. monitored at an area with an exploitable hydrocarbon underground deposit present, is shown.

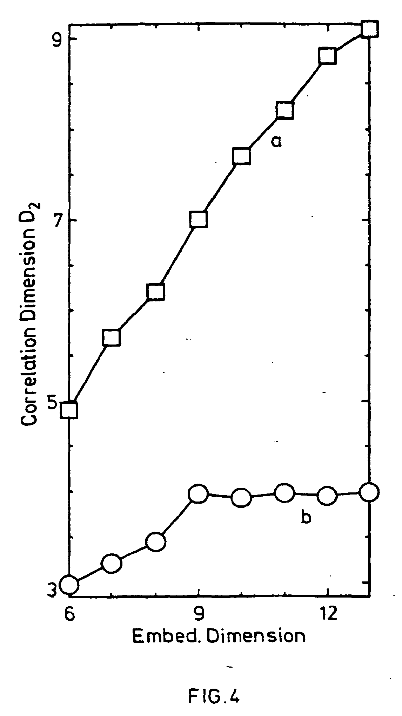

In fig. 4 signal according to (a) of fig. 2, i.e. monitored at an area without exploitable hydrocarbon underground deposits, is shown with the chaos indicator correlation dimension versus embedding dimensions, whereas in (b) of fig. 4 this indicator is shown for signals of an area with hydrocarbon deposits present as of (b) of fig. 2.

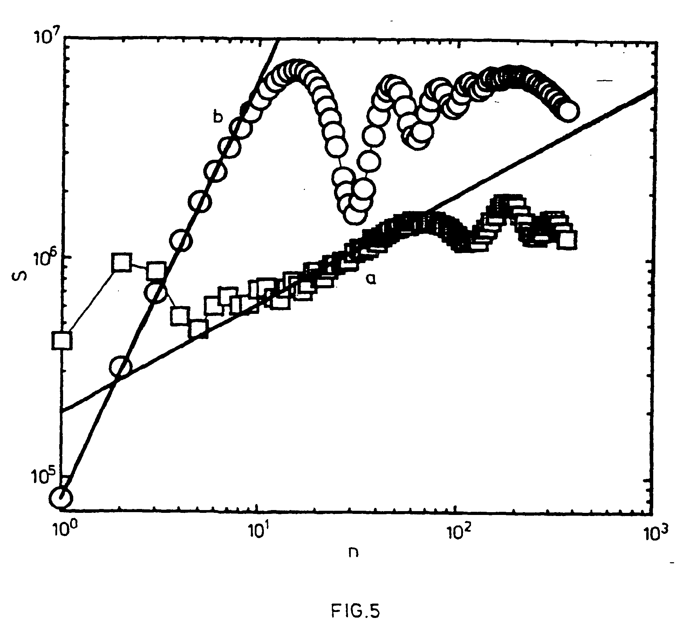

A third representation or chaos indicator of the signals as monitored, namely the Structure Function representation, is shown in fig. 5, resulting from the signal according to (a) of fig. 2 in (a) of fig. 5, i.e. monitored at an area without exploitable hydrocarbon underground deposit and, respectively, in (b) of fig. 5 according to the original signal (b) in fig. 2, i.e. with exploitable hydrocarbon underground deposit present.

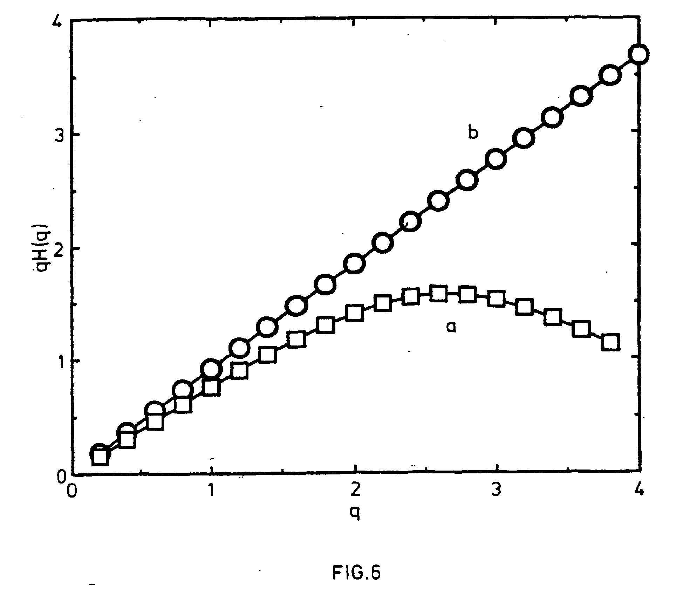

A still further and preferred chaos indicator, namely the Hurst-exponent-spectrum of the signals as monitored, is shown respectively in (a) and (b) of fig. 6. Course (a) results from signal (a) of fig. 2, i.e. from monitoring an area without hydrocarbon deposit, course (b) results from signal (b) of fig. 2, i.e. from monitoring an area with hydrocarbon deposit present in the underground.

As shown in fig. 1 the analysing unit 7 preferably also performs a frequency spectrum representation on the signals input to E₇.

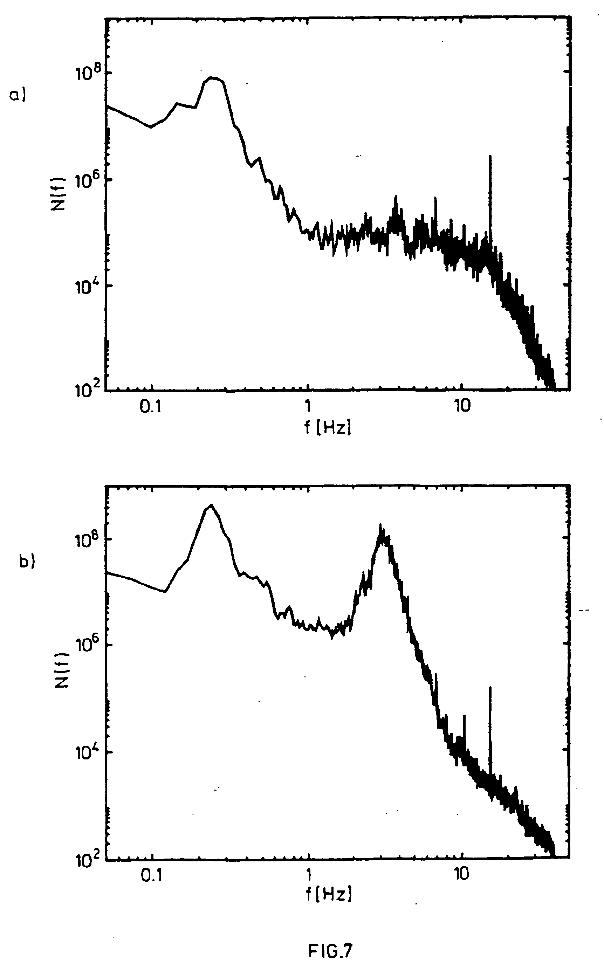

In a preferred mode both chaos indicator representation as well as frequency spectrum representation are exploited. In Fig. 7 the frequency spectra are shown of the monitored signals as of (a) and (b) of fig. 2, accordingly represented in fig. 7 (a) and (b).

At the output of the analysis unit 7 there appears the result of non-linear time series analysis of the signals monitored by the transducer arrangement 1 or of the deterministic-chaotic signal component in one or more than one chaos indicator representation. Thereby, the representations as of figs. 3 to 6 and their combinations are today preferred.

Still following fig. 1 signals resulting from the non-linear time series analysis performed in analysis unit 7 and additionally preferred of FFT are led to a comparing unit 9.

In a further improved embodiment, a storage unit 11 stores the same signal type of signals as output from the analysing unit 7, but from signals which have been monitored and analysed with the same apparatus as shown in fig. 1 at areas with predetermined subterranean property, especially with exploitable hydrocarbon subterranean deposits present.

In comparing unit 9 the indicative signals output from unit 7 - the chaos indicators - especially prevailing from deterministic-chaotic signal components of signals at the input of unit 7 and - preferably - frequency spectra thereof are compared with the prerecorded respective signals stored in storage unit 11.

At the output A₉ there is generated a signal as result of the comparison indicating if the area under investigation has a predetermined subterranean property especially if exploitable subterranean hydrocarbon deposits are present or not.

It goes without saying that possibly such indication may directly be recognised e.g. on a screen at the output of the analyser unit 7, e.g. if the representation of Hurst-exponent-spectrum according to fig. 6 is exploited, which in fact allows direct interpretation of the output signal of analysing unit 7.

By means of the preferred non-linear time series analysis and exploiting the deterministic-chaotic signal components, noise sources as of manmade noise and/or nature-made noise, e.g. generated by technical plants adjacent to the area monitored as well as purely stochastic noise may be filtered out. It has been recognised that especially the deterministic-chaotic signal components are most indicative for the presence of predetermined structures and deposits and are most significant, especially for hydrocarbon deposits in the subterranean underground. By the fact that the inventive method and apparatus will improve identification of hydrocarbon deposits and will therefore significantly lower the price for finding such deposits, it leads to a method for producing all kinds of materials with components derived from such naturally exploited hydrocarbon or directly of such hydrocarbon which products are significantly lower in overall production price compared with the same products manufactured exclusively with prior art methods and apparatus for finding subterranean hydrocarbon deposits.

## Claims

1. A method for investigating an area with respect to presence/absence of a predetermined multiphase fluidic system in subterranean underground, comprising the steps of:
• monitoring mechanical and/or electromagnetic signals emanating from subterranean underground of an investigated area;
• analysing said signals by means of a non-linear time series analysis;
• comparing the result of said analysing with the result of an equal analysis of signals emanating from subterranean underground of at least one area with known presence of said multiphase fluidic system;
• identifying presence or absence of said multiphase fluidic system at said investigated area by the result of said comparing.

2. The method of claim 1, thereby monitoring said signals without applying an investigation stimulus.

3. The method of claim 1 or 2, said analysing including neglecting or separating deterministic and stochastic signal components from said signals and extracting from said signals deterministic-chaotic components and performing said comparing including comparing said deterministic-chaotic components.

4. The method of one of claims 1 to 3, thereby selecting said predetermined multiphase fluidic system to be presence/absence of exploitable subterranean hydrocarbon deposits.

5. The method of one of claims 1 to 4, said analysing including representing said signals and/or components of said signals by at lest one chaos indicator, especially by at least one of the following chaos indicators:
- delay embedding
- correlation dimension versus embedding dimension
- structure function representation
- Hurst-exponent-spectrum.

6. The method of one of claims 1 to 5, wherein said analysing comprises additionally analysing said signals in their frequency spectrum representation.

7. An apparatus for investigating an area with respect to presence/absence of a predetermined multiphase fluidic system in subterranean underground comprising:
- an arrangement of at least one transducer sensing mechanical and/or electromagnetic earth signals and generating at least one output signal at an output;
- an analysing unit, an input thereof being operationally connectable to said output of said arrangement and performing a non-linear time series analysis on a signal applied to said input, the output signal of said unit being indicative for said presence/absence.

8. The apparatus of claim 7, said analysing unit generating at its output a signal representing at least one chaos indicator of a signal input to said input of said analysing unit.

9. The apparatus of one of claims 7 or 8, wherein said analysing unit generates an output signal in dependency of the deterministic-chaotic signal component of a signal applied to said input.

10. The apparatus of claim 8 or 9, wherein the output signal of said analysing unit represents at least one chaos indicator in at least one of the following representations:
- delay embedding
- correlation dimension versus embedding dimension
- structure function
- Hurst-exponent-spectrum.

11. The apparatus of at least one of claims 7 to 10, wherein said analysing unit generates a further output signal representing a frequency spectrum of a signal input to the input of said analysing unit.

12. The apparatus of one of claims 7 to 11, further comprising a comparing unit, one input thereof being operationally connected to the output of said analysing unit, a second input thereof being operationally connected to the output of a storage unit, said comparing unit generating an output signal indicating presence or absence of said predetermined multiphase fluidic system of an area wherefrom said at least one signal input to the input of said analysing unit results from.

13. A method for manufacturing a product with at least one component derived from natural hydrocarbon or being natural hydrocarbon as exploited from subterranean underground, said method comprising the steps of
- monitoring mechanical and/or electromagnetic signals emanating from subterranean underground of an investigated area;
- analysing said signal by means of a non-linear time series analysis;
- comparing the result of said analysing with the result of an equal analysis of signals emanating from subterranean underground of at least one area with known presence of exploitable subterranean hydrocarbon deposits;
- identifying presence or absence of said hydrocarbon deposits at said investigated area by the result of said comparing;
- exploiting said subterranean hydrocarbon deposits of said investigated area if said comparing result identifies such presence and producing said product by said hydrocarbon exploited.

## Patentansprüche

1. Verfahren zum Untersuchen eines Areals hinsichtlich des Vorkommens/Fehlens eines vorbestimmten strömungstechnischen Mehrphasensystems im subterranen Untergrund, wobei schrittweise:
• eine Überwachung mechanischer und/oder elektromagnetischer Signale, welche von einem untersuchten Bereich des subterranen Untergrundes ausgehen, durchgeführt wird,
• eine Analyse dieser Signale mittels nicht-linearer Zeitreihenanalyse durchgeführt wird,
• ein Vergleich des Ergebnisses dieser Analyse mit den Ergebnissen einer entsprechenden Analyse von Signalen, welche von wenigstens einem Areal mit bekanntem Vorkommen des strömungstechnischen Multiphasensystems ausgestrahlt werden, vorgenommen wird und
• eine Identifizierung des Vorkommens oder Fehlens dieses strömungstechnischen Multiphasensystems in dem untersuchten Areal anhand vorgenannten Vergleichsergebnisses durchgeführt wird.

2. Verfahren nach Anspruch 1, **dadurch gekennzeichnet, dass** die Überwachung der Signale ohne Verwendung eines Untersuchungsstimulus erfolgt.

3. Verfahren nach Anspruch 1 oder 2, **dadurch gekennzeichnet, dass** die Analyse das Vernachlässigen oder Separieren deterministischer und stochastischer Signalkomponenten dieser Signale und das Extrahieren deterministisch-chaotischer Komponenten dieser Signale und das Durchführen dieses Vergleichs, einschließlich dem Vergleich der deterministisch-chaotischen Komponenten, beinhaltet.

4. Verfahren nach einem der Ansprüche 1 bis 3, **dadurch gekennzeichnet, dass** selektiert wird, ob bei dem strömungstechnischen Multiphasensystem verwertbare subterrane Kohlenwasserstoffvorkommen vorkommen/fehlen.

5. Verfahren nach einem der Ansprüche 1 bis 4, **dadurch gekennzeichnet, dass** die Analyse das Darstellen der Signale und/oder der Komponenten der Signale durch wenigstens einen Chaosindikator, insbesondere durch wenigstens einen der folgenden Chaosindikatoren:
- delay embedding,
- korrelierte Dimension im Vergleich mit eingebetteter Dimension
- Hurst-Exponent-Spektrum
beinhaltet.

6. Verfahren nach einem der Ansprüche 1 bis 5, **dadurch gekennzeichnet, dass** die Analyse zusätzlich eine Analyse der Signale in ihrer Frequenzspektrumsdarstellung umfasst.

7. Eine Vorrichtung zum Untersuchen eines Areals hinsichtlich des Vorkommens/Fehlens eines vorbestimmten strömungstechnischen Multiphasensystems im subterranen Untergrund, wobei
• eine Anordnung mit wenigstens einem Messwertgeber "Transducer" zum Aufspüren von mechanischen und/oder elektromagnetischen Bodensignalen und zum Generieren von wenigstens einem Ausgangssignal an einem Ausgang, sowie
• eine Analyseeinheit, von welcher ein Eingang mit dem Ausgang der Anordnung im Betrieb verbindbar ist und eine nicht-lineare Zeitreihenanalyse für ein, an dem Eingang anliegenden Signal, durchführt, wobei das Ausgangssignal dieser Einheit ein Indikator für genanntes Vorkommen/Fehlen ist, vorgesehen sind.

8. Vorrichtung nach Anspruch 7, **dadurch gekennzeichnet, dass** die Analyseeinheit an ihrem Ausgang ein Signal generiert, welches wenigstens einen Chaosindikator eines Signaleingangs auf den Eingang der Analyseeinheit abbildet.

9. Vorrichtung nach einem der Ansprüche 7 oder 8, **dadurch gekennzeichnet, dass** die Analyseeinheit ein Ausgangssignal in Abhängigkeit der deterministisch-chaotischen Signalkomponente eines an dem Eingang anliegenden Signals generiert.

10. Vorrichtung nach Anspruch 8 oder 9, **dadurch gekennzeichnet, dass** das Ausgangssignal der Analyseeinheit wenigstens einen Chaosindikator in wenigstens einer der folgenden Darstellungen repräsentiert:
- delay embedding,
- korrelierte Dimension im Vergleich mit eingebetteter Dimension
- Hurst-Exponent-Spektrum
beinhaltet.

11. Vorrichtung nach einem der Ansprüche 7 bis 10, **dadurch gekennzeichnet, dass** die Analyseeinheit ein weiteres Ausgangssignal generiert, welches das Frequenzspektrum eines Signaleingangs auf den Eingang der Analyseeinheit abbildet.

12. Vorrichtung nach wenigstens einem der Ansprüche 7 bis 11, **dadurch gekennzeichnet, dass** weiterhin eine Vergleichseinheit vorgesehen ist, von welcher ein Eingang im Betrieb mit dem Ausgang der Analyseeinheit verbunden ist, von welcher ein zweiter Eingang im Betrieb mit dem Ausgang einer Speichereinheit verbunden ist, besagte Vergleichseinheit ein Ausgangssignal generiert, welches das Vorkommen oder Fehlen des strömungstechnischen Multiphasensystems eines Areals indiziert, von welchem das wenigstens eine Eingangssignal am Eingang der Analyseeinheit resultiert.

13. Ein Verfahren zu Herstellung eines Produktes mit wenigstens einer Komponente, welche aus natürlichem Kohlenwasserstoff gewonnen wird oder natürlicher Kohlenwasserstoff ist, wie er aus subterranem Untergrund gewonnen wird, wobei das Verfahren die Schritte:
• Überwachen mechanischer und/oder elektromagnetischer Signale, welche von einem untersuchten Areal des subterranen Untergrundes ausgehen,
• Analysieren der Signale mittels einer nicht-linearen Zeitreihenanalyse,
• Vergleichen des Ergebnisses dieser Analyse mit den Ergebnissen einer entsprechenden Analyse von Signalen, welche von wenigstens einem Areal mit bekanntem Vorkommen verwertbarer subterraner Kohlenwasserstoffvorkommen ausgehen,
• Identifizieren des Vorkommens oder Fehlens der Kohlenwasserstoffablagerungen in dem untersuchtem Bereich anhand des Vergleichsergebnisses,
• Verwerten der subterranen Kohlenwasserstoffvorkommen des untersuchten Bereichs, falls das Vergleichsergebnis das Vorkommen belegt, und Herstellen des Produktes mittels des verwerteten Kohlenwasserstoffs, umfasst.

## Revendications

1. Procédé pour investiguer une zone quant à la présence/l'absence d'un système fluidique multiphase prédéterminé dans le sous-sol souterrain, comprenant les étapes de:
- surveillance de signaux mécaniques et/ou électromagnétiques qui émanent du sous-sol souterrain d'une zone investiguée;
- analyse desdits signaux au moyen d'une analyse par série temporelle non linéaire;
- comparaison du résultat de ladite analyse avec le résultat d'une analyse équivalente de signaux émanant du sous-sol souterrain d'au moins une zone moyennant une présence connue dudit système fluidique multiphase; et
- identification de la présence ou de l'absence dudit système fluidique multiphase au niveau de ladite zone investiguée au moyen du résultat de ladite comparaison.

2. Procédé selon la revendication 1, d'où ainsi la surveillance desdits signaux sans l'application d'un stimulus d'investigation.

3. Procédé selon la revendication 1 ou 2, ladite analyse incluant la négligence ou la séparation de composantes de signal déterministe et stochastique à partir desdits signaux et l'extraction, à partir desdits signaux, de composantes déterministes-chaotiques, et la réalisation de ladite comparaison incluant la comparaison desdites composantes déterministes-chaotiques.

4. Procédé selon l'une quelconque des revendications 1 à 3, d'où ainsi la sélection dudit système fluidique multiphase prédéterminé comme étant la présence/l'absence de dépôts d'hydrocarbures souterrains exploitables.

5. Procédé selon l'une quelconque des revendications 1 à 4, ladite analyse incluant la représentation desdits signaux et/ou desdites composantes desdits signaux au moyen d'au moins un indicateur de chaos, tout particulièrement au moyen d'au moins l'un des indicateurs de chaos qui suivent:
- noyage de retard;
- dimension de corrélation en fonction de la dimension de noyage;
- représentation de fonction de structure; et
- spectre-exposant Hurst.

6. Procédé selon l'une quelconque des revendications 1 à 5, dans lequel ladite analyse comprend l'analyse de façon additionnelle desdits signaux selon leur représentation par spectre de fréquences.

7. Appareil pour investiguer une zone quant à la présence/l'absence d'un système fluidique multiphase prédéterminé dans un sous-sol souterrain, comprenant:
- un agencement constitué par au moins un transducteur qui détecte des signaux terrestres mécaniques et/ou électromagnétiques et qui génère au moins un signal de sortie au niveau d'une sortie; et
- une unité d'analyse dont une entrée peut être connectée en fonctionnement à ladite sortie dudit agencement et qui réalise une analyse par série temporelle non linéaire sur un signal qui est appliqué sur ladite entrée, le signal de sortie de ladite unité étant indicatif de ladite présence/absence.

8. Appareil selon la revendication 7, ladite unité d'analyse générant au niveau de sa sortie un signal qui représente au moins un indicateur de chaos d'un signal qui est entré sur ladite entrée de ladite unité d'analyse.

9. Appareil selon l'une quelconque des revendications 7 et 8, dans lequel ladite unité d'analyse génère un signal de sortie en fonction de la composante de signal déterministechaotique d'un signal qui est appliqué sur ladite entrée.

10. Appareil selon la revendication 8 ou 9, dans lequel le signal de sortie de ladite unité d'analyse représente au moins un indicateur de chaos selon au moins l'une des représentations qui suivent:
- noyage de retard;
- dimension de corrélation en fonction de la dimension de noyage;
- fonction de structure; et
- spectre-exposant Hurst.

11. Appareil selon au moins l'une des revendications 7 à 10, dans lequel ladite unité d'analyse génère un signal de sortie supplémentaire qui représente un spectre de fréquences d'un signal qui est entré sur l'entrée de ladite unité d'analyse.

12. Appareil selon l'une quelconque des revendications 7 à 11, comprenant en outre une unité de comparaison dont une première entrée est connectée en fonctionnement à la sortie de ladite unité d'analyse, dont une seconde entrée est connectée en fonctionnement à la sortie d'une unité de stockage, ladite unité de comparaison générant un signal de sortie qui indique la présence ou l'absence dudit système fluidique multiphase prédéterminé d'une zone de laquelle résulte ledit au moins un signal qui est entré sur l'entrée de ladite unité d'analyse.

13. Procédé de fabrication d'un produit avec au moins un composant dérivé à partir d'un hydrocarbure naturel ou qui est un hydrocarbure naturel tel qu'exploité à partir du sous-sol souterrain, ledit procédé comprenant les étapes de:
- surveillance de signaux mécaniques et/ou électromagnétiques qui émanent du sous-sol souterrain d'une zone investiguée;
- analyse desdits signaux au moyen d'une analyse par série temporelle non linéaire;
- comparaison du résultat de ladite analyse avec le résultat d'une analyse équivalente de signaux émanant du sous-sol souterrain d'au moins une zone moyennant une présence connue de dépôts d'hydrocarbures souterrains exploitables;
- identification de la présence ou de l'absence desdits dépôts d'hydrocarbures au niveau de ladite zone investiguée au moyen du résultat de ladite comparaison; et
- exploitation desdits dépôts d'hydrocarbures souterrains de ladite zone investiguée si ledit résultat de comparaison identifie une telle présence et production dudit produit au moyen dudit hydrocarbure exploité.
